# EUROPEAN PATENT APPLICATION

(11) **EP 4 625 261 A1**
(43) Date of publication of application: **01.10.2025**
(21) Application number: 24166844.1
(22) Date of filing: 27.03.2024
(51) Int. Cl.: G06N 3/098, H04W 4/029, H04W 64/00

(54) **METHOD FOR MOBILE TERMINAL POSITION DETERMINATION**

(71) Applicant: NTT DOCOMO, INC., Tokyo 100-6150 (JP)
(72) Inventor: BAKHSHI, Bahador, 80687 Munich (DE); SAMA, Malla Reddy, 80687 Munich (DE); GUERZONI, Riccardo, 80687 Munich (DE); TANAKA, Itsuma, 80687 Munich (DE)
(74) Representative: Viering, Jentschura & Partner mbB Patent- und Rechtsanwälte

(57) **Abstract**

According to one embodiment, a method for mobile terminal positioning is described comprising training a positioning machine learning model to output positioning information in response to mobile terminal status information by federated learning using a plurality of positioning components as federated learning clients and determining a position of a plurality of mobile terminals using the trained positioning machine learning model.

## Description

The present disclosure relates to methods for mobile terminal positioning.

Mobile terminal positioning is a necessary task for efficient operation of mobile communication systems, e.g. for efficient beamforming. This task may be addressed using a machine learning approach. However, since there are challenges in the training like training data being gathered locally at positioning components and there being multiple categories of mobile terminals, efficient positioning approaches, in particular with respect to training data transmission overhead and training efficiency of machine learning models used for the positioning, are desirable.

According to one embodiment, a method for mobile terminal positioning is provided comprising training a positioning machine learning model to output positioning information in response to mobile terminal status information by federated learning using a plurality of positioning components as federated learning clients and determining a position of a plurality of mobile terminals using the trained positioning machine learning model.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a mobile communication system.
Figure 2 illustrates an architecture for ML (machine learning) model training in a scenario with multiple LMFs (location management functions).
Figure 3 illustrates registration of a base model provider.
Figure 4 illustrates registration of an FL (federated learning) server.
Figure 5 illustrates registration of an LMF.
Figure 6 shows a flow diagram illustrating base model training.
Figure 7 shows a flow diagram illustrating training an ML model by federated learning.
Figure 8 shows a flow diagram illustrating a flow for using a positioning model for inference.
Figure 9 shows a flow diagram illustrating a method for mobile terminal positioning according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for mobile terminal positioning, comprising training a positioning machine learning model to output positioning information in response to mobile terminal status information by federated learning using a plurality of positioning components as federated learning clients and determining a position of a plurality of mobile terminals using the trained positioning machine learning model.
Example 2 is the method of example 1, wherein the positioning components and/or one or more other positioning components determine the position of the plurality of mobile terminals using the trained positioning machine learning model.
Example 3 is the method of example 1 or 2, comprising training, for each mobile terminal category of a plurality of mobile terminal categories, a respective positioning machine learning model to output positioning information in response to mobile terminal status information by federated learning using a respective plurality of positioning components as federated learning clients and determining a position of a plurality of mobile terminals of the category using the respective trained positioning machine learning model.
Example 4 is the method of any one of examples 1 to 3, wherein the categories differ in a mobility of the mobile terminals and/or wherein the categories differ in a location of the mobile terminals.
Example 5 is the method of any one of examples 1 to 4, comprising registering positioning components supporting federated learning in a positioning component repository using positioning component profiles indicating their federated learning capabilities and selecting the plurality of positioning components from the registered positioning components.
Example 6 is the method of any one of examples 1 to 5, comprising selecting a federated learning server supporting training of the positioning machine learning model and controlling the federated learning by the selected federated learning server.
Example 7 is the method of example 6, comprising registering federated learning servers in a federated learning server repository using federated server profiles indicating their federated learning capabilities and selecting the federated learning server from the registered federated learning servers.
Example 8 is the method of any one of examples 1 to 7, comprising training a base model and using the trained base model for a starting point for training the positioning machine learning model.
Example 9 is the method of example 8, comprising adding one or more neural network layers to the base layer to construct the positioning machine learning model.
Example 10 is the method of example 8 or 9, comprising training the base model by a base model provider and acquiring the trained base model from the base model provider.
Example 11 is the method of example 10, comprising registering base model providers in a base model provider repository using base model profiles indicating their base model training capabilities and determining the base model provider from which to acquire the trained base model from the registered base model providers.
Example 12 is the method of any one of examples 8 to 11, comprising training the base model using training data acquired from the plurality of positioning components and/or one or more further positioning components.
Example 13 is the method of any one of examples 8 to 12, comprising training the base model using training data whose amount is reduced with respect to the amount of local training data available at the plurality of positioning components and/or one or more further positioning components by sampling from, aggregating and/or filtering the local training data.
Example 14 is the method of any one of examples 8 to 13, comprising training the base model using training data whose amount is reduced with respect to the amount training data used by the federated learning clients to train the positioning machine learning model.
Example 15 is the method of any one of examples 1 to 14, wherein each positioning component of the plurality of positioning components is configured to perform local training in the federated learning using local training data which it has acquired from positioning using one or more other positioning machine learning models and/or one or more other non-machine learning positioning methods.
Example 16 is a mobile terminal positioning system configured to perform the method of any one of examples 1 to 15.

According to further embodiments, a computer program and a computer readable medium comprising instructions, which, when executed by a computer, make the computer perform the method of any one of the above examples are provided.

In the following, various examples will be described in more detail.

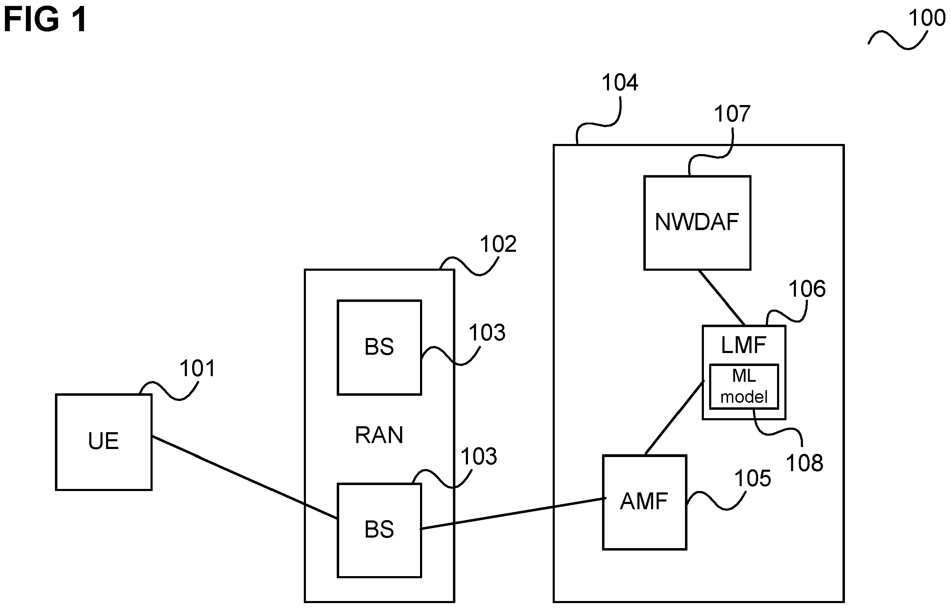

Figure 1 shows a mobile communication system 100.

The mobile communication system 100 comprise a mobile terminal 101 (also referred to as User Equipment (UE)) which is served by a communication network (i.e. the network side of the communication system 100), in particular a radio access network 102 which is implemented by multiple base stations 103 (which may be of different generations, e.g. an eNB or a gNB). The radio access network 102 is connected to a core network 104, in this example a 5G core network which includes network functions, in particular an AMF (Access and Mobility Management Function) 105.

One task that needs to be performed by the network side when serving a mobile terminal 101 is positioning of the mobile terminal 101, i.e. determining the location of the mobile terminal 101, for example to be able to perform beamforming when sending data to the mobile terminal 101. For this, a positioning component, specifically a Location Management Function (LMF) 106 is provided in the core network 104. The core network 104 further comprises an NWDAF (Network Data Analytics Function) 107.

The NWDAF 107 is responsible for providing network analysis and/or prediction information upon request from network functions. For example, a network function may request specific analysis information on the load level of a particular network slice instance. Alternatively, the network function can use the subscribe service to ensure that it is notified by the NWDAF if the load level of a network slice instance changes or reaches a specific threshold. According to 3GPP Release 17 (Rel-17) an NWDAF is decomposed into two functions or categories, an NWDAF AnLF (Analytics Logical Function) and an NWDAF MTLF (Model Training Logical Function). An NWDAF containing the Analytics logical function is denoted as NWDAF(AnLF) or NWDAF-AnLF or simply AnLF and can perform inference, derive analytics information and expose analytics service i.e. Nnwdaf_AnalyticsSubscription or Nnwdaf_AnalyticsInfo. An NWDAF containing the Model Training logical function is denoted as NWDAF(MTLF) or NWDAF-MTLF or simply MTLF, trains machine learning (ML) models and exposes new training services (e.g. providing trained model). An NWDAF comprising both may be denoted as NWDAF (MTLF+AnLF).

The LMF 106 determines the position of the mobile terminal 101 from inputs such as positioning reference signal (NR PRS, transmitted in downlink) measurements and sounding reference signal (SRS, transmitted in uplink) measurements. The LMF 106 may do this using a machine learning (ML) model 108, wherein there are two cases:
- D-AIML (direct): the ML model 108 outputs positioning information which specifies the position of the mobile terminal 101
- A-AIML (assistant): the ML model 108 outputs assistant positioning information which is used as input to another method or model to determining the position of the mobile terminal 101

The inputs for the LMF 106 are delivered from the RAN 102 via the AMF 105 to the LMF 106. They may come from the base station 103 serving the mobile terminal 101 (e.g. in case of an SRS measurement) or from the mobile terminal 101 via the base station 103 (e.g. in case of a PRS measurement).

The LMF 106 may generate (local) training data (comprising training data elements of inputs and labels (i.e. ground truth for the positions) for the ML model 108 by performing positioning using non-ML methods or using another ML model.

The ML model 108 may be trained by the NWDAF 107 (specifically comprising an MTLF in that case). For this, the LMF 106 may supply the training data it has generated to the NWDAF 107.

However, since the LMF 106 performs the inference (i.e. uses the trained ML model 108 for positioning) it may be considered as unnecessary overhead to send the training data from the LMF 106 to the NWDAF 107 for training and then sending back the trained ML model 108 to the LMF 106. On the other hand, the LMF 106 performing the model training itself (i.e. comprises and MTLF) may become inefficient when there multiple LMFs 106 in the communication system since each LMF 106 trains its own ML model 108 and this may include redundant training since the ML models 108 may be similar. So, this may cause significant load on the LMFs 106 which may at least partially be redundant.

However, it should be noted that there are typically different categories of mobile terminals, like for example
- In-door UEs
- Out-door UEs
- Stationary UEs
- High-speed UEs (i.e. UEs moving at high speed)
- UEs for which 3D positioning is required or requested (e.g. because there is high height variation)
Which may make the usage of multiple ML models desirable: a single ML model 108 for determining positioning information for all these categories may be either very complex or have low accuracy ML. On the other hand, training an individual ML model for each category may provide better accuracy but lead to redundant ML model training because the models for the different categories may be rather similar.

As mentioned above, model training in the NWDAF 107 leads to a high signalling overhead while model training in the LMFs 106 (at least when there are multiple LMFs) may lead to redundant and thus inefficient training. In view of this, according to various embodiments, an approach is provided which allows efficiently training an ML model (or possibly multiple ML models to have one for different UE categories) for UE positioning on the LMF side in the case of deployment of multiple LMFs.

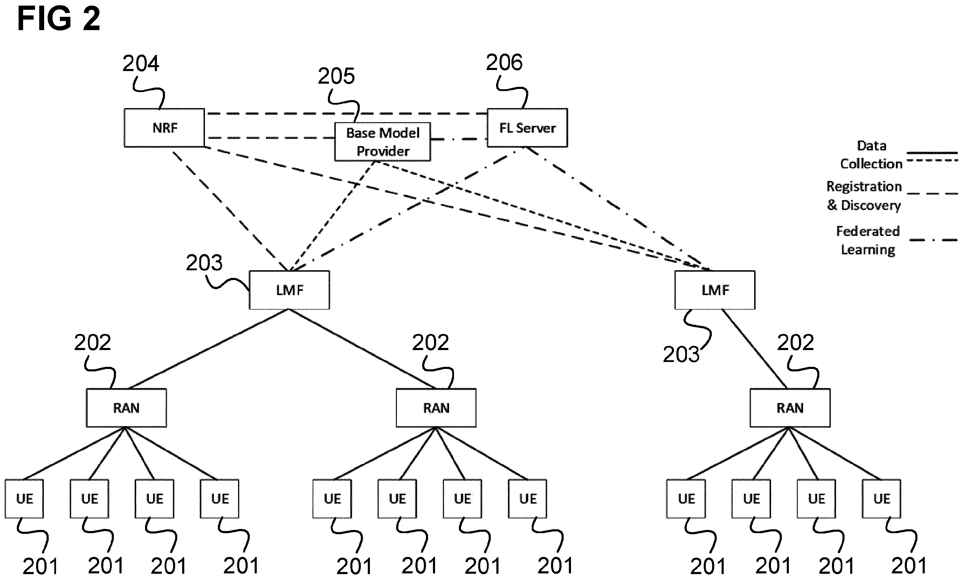

Figure 2 illustrates an architecture for ML model training in a scenario with multiple LMFs 203.

As explained with reference to figure 1, the LMFs 203 are each connected to one or more RANs 202 (each comprising one or more base stations) which serve UEs 201. The LMFs 203 are responsible for positioning for UEs served by the respective RAN(s) 202 to which they are connected. The architecture further comprises a network repository function (NRF) 204, a base model provider 205 (e.g. server and/or network function, e.g. an NWDAF(MTLF)) and a federated learning (FL) server 206. As explained above, the LMFs 203 collect local training data, which is referred to as local training data in the following.

According to various embodiments, the following is performed:
1) All entities involved in the training (i.e. LMFs 203, base model provider 205 and FL server 206) register their capabilities and supported ML models in the NRF 204
2) The base model provider 205 collects a portion of the local training data from the LMFs 203. This means that the amount of training data collected by the base model provider 205 is lower than the total amount of local training data (of all LMFs), i.e. the base model training data does not include the full local training data (of all LMFs). This is for example done by aggregating local training data or sampling from local training data or filtering from local training data. Thus, there is low overhead compared to the case that all training data is delivered to, for example, an NWDAF.
3) The base model provider 205 trains a base model (e.g. deep neural network) using the collected training data
4) The FL Server 206 gets the base model and builds (constructs) a specific ML model for each category of UEs (e.g., by augmenting the base ML model by adding new layers). This is referred to as global model (or global version of the model) for that category. The base model may also already have all the layers but it is used as pre-trained version of the ML model to be trained. In other words, the base model is used as a starting point for the specific ML model (and layers may or may not be added to it).
5) When an ML model (or updated or retrained ML model) for positioning a specific category of UEs is needed in an LMF 203, it finds the FL server 206 via the NRF 204 and requests the specific ML model for that category
6) The FL Server 206 selects some of the LMFs 203 (which it finds via the NRF 204) and distributes the corresponding global ML model (for the respective category) to the selected LMFs 203.
7) Each selected LMF 203 locally trains the (specific) ML model using their own full local training data to generate an update of the ML model and sends the update of the ML model to the FL server 206
8) The FL Server 206 updates its global version of the ML model.
9) Step 6 to 8 are repeated until the some termination criterion is fulfilled (e.g. ML model converges)
10) The LMF 203 which needed the ML model for positioning gets the last version of global model from the FL server 206 and uses it for inference (for direct positioning (D-AIML) or assistant positioning (A-AIML).

When an LMF 203 performs positioning for UEs of multiple categories, it may use an ensemble of machine learning models it has acquired in this manner.

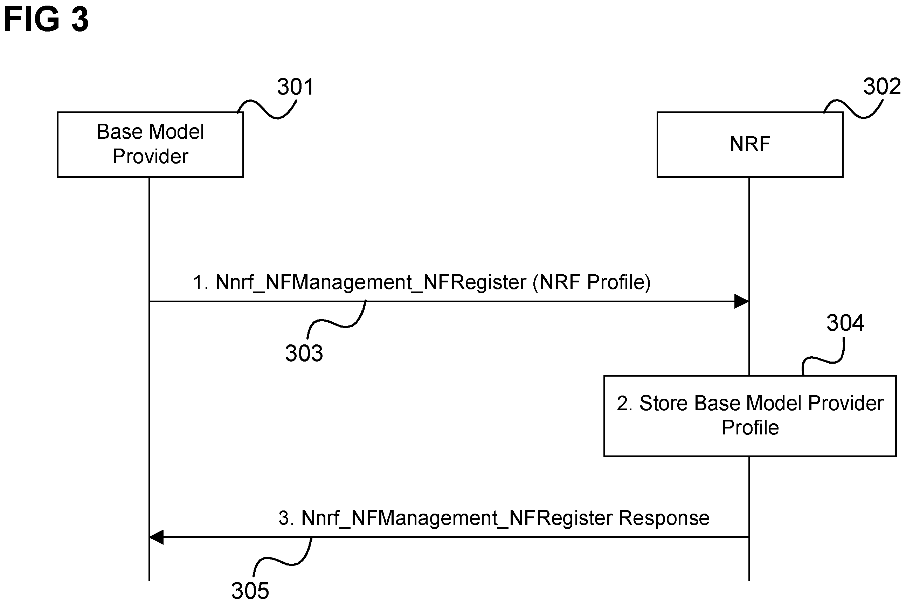

As mentioned above, in 1) of the above procedure, the involved entities register at the NRF 204. This is described in more detail with reference to figures 3 to 5.

Figure 3 illustrates registration of the base model provider 301 at the NRF 302.

In 303, the base model provider 301 sends a registration message to the NRF 302. The registration message includes a profile of the base model provider 301 which specifies as capability that it supports base model training and a list of supported ML models for UE positioning, e.g.
- Model 1
   ∘ Direct AIML
   ∘ List of input data
   ∘ Base of specific model for
      ▪ Indoor positioning
      ▪ Stationary UE positioning
- Model 2
   ∘ Direct AIML
   ∘ List of input data
   ∘ Base of specific model for
      ▪ Outdoor positioning
      ▪ High speed UE positioning

In 304, the NRF stores the profile of the base model provider 301 and acknowledges in 305.

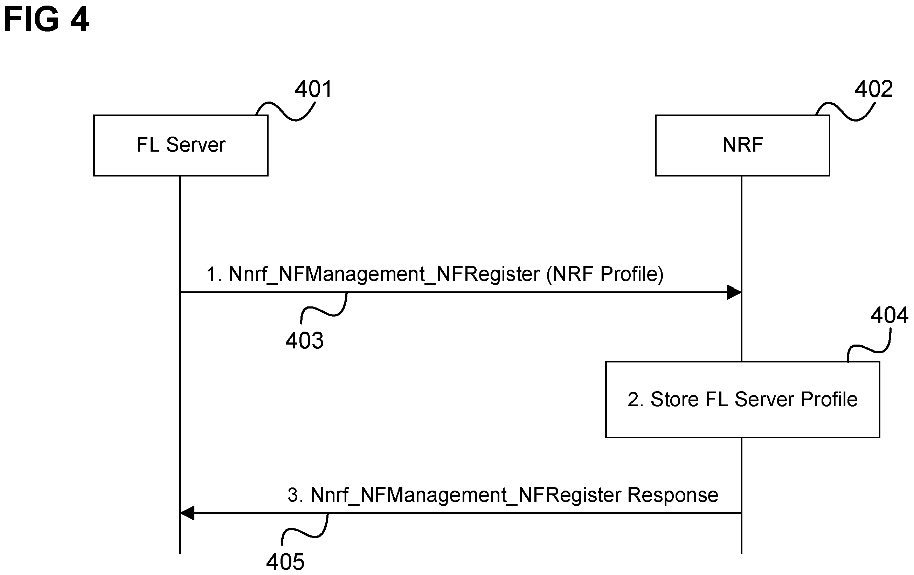

Figure 4 illustrates registration of the FL server 401 at the NRF 402.

In 403, the FL server 401 sends a registration message to the NRF 402. The registration message includes a profile of the FL server 401 which specifies as capability that it can act as a FL server and a list of supported ML models, e.g.
- Model 1
   ∘ Direct AIML
   ∘ List of input data
   ∘ Functionalities
      ▪ Indoor positioning
- Model 2
   ∘ Indirect AIML
   ∘ List of input data
   ∘ Functionalities
      ▪ Outdoor positioning
      ▪ High speed UE positioning

In 404, the NRF stores the profile of the FL server 401 and acknowledges in 405.

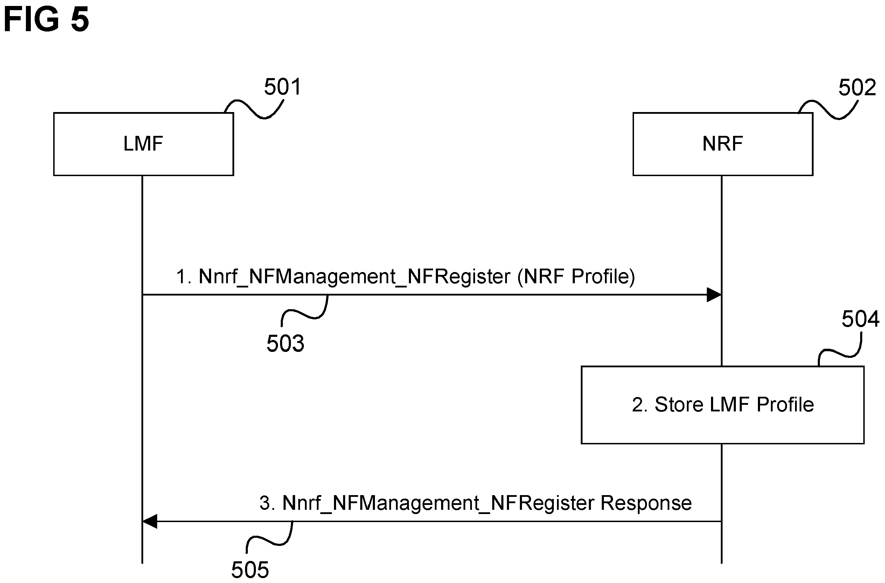

Figure 5 illustrates registration of an LMF 501 at the NRF 502.

In 503, the LMF 501 sends a registration message to the NRF 502. The registration message includes a profile of the LMF 501 which specifies as capability that it can act as a FL client and a list of supported ML models for FL, e.g.
- Model 1
   ∘ Direct AIML
   ∘ List of input data
   ∘ Functionalities
      ▪ Indoor positioning
- Model 2
   ∘ Indirect AIML
   ∘ List of input data
   ∘ Functionalities
      ▪ Outdoor positioning
      ▪ High speed UE positioning

In 504, the NRF stores the profile of the LMF 501 and acknowledges in 505.

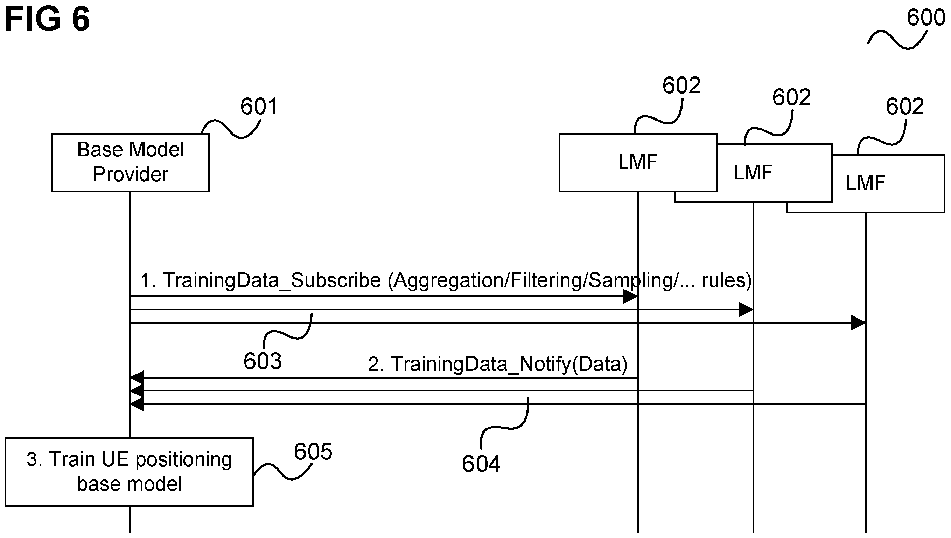

Figure 6 shows a flow diagram 600 illustrating base model training which involves the base model provider 601 and the selected LMFs 602.

For collecting training data for training the base model, the base model provider 601 in 603 subscribes to the LMFs 602 for the training data (or requests training data from the LMFs 602). It may in a corresponding subscription message specify rules on how the amount of data that the LMFs 602 provide should be reduced with respect to the (total) local data, e.g. aggregation rules, filtering rules (which specify which parts of the local data should be filtered out), sampling rules, etc.

In 604, the LMFs 602 provide training data according to the rules to the base model provider 601.

In 605, the base model provider 601 trains the base model using the training data provided by the LMFs 602.

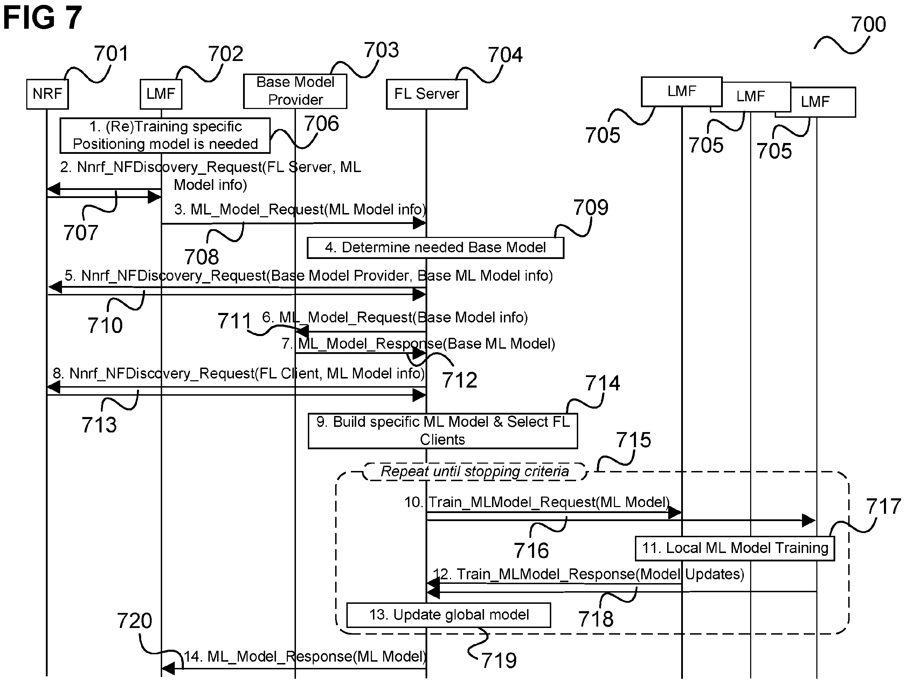

Figure 7 shows a flow diagram 700 illustrating training an ML model by federated learning.

The flow takes place between an NRF 701 (in which the entities involved in the federated learning have been registered as described above with reference to figures 3 to 5), an LMF 702, a base model provider 703 (which has trained a base model as described with reference to figure 6), an FL server 704, and a set of LMFs 705 to which the LMF 702 may or may not belong.

In 706, the LMF 702 determines that training or retraining of a specific positioning (ML) model (i.e. a ML model for generating positioning information of a mobile terminal from input data including information about the mobile terminal) is needed.

In 707, the LMF 702 discovers a suitable FL server 704 using the NRF 701 by sending a corresponding request which gives information about the model (e.g. the UE category for which the model should be trained).

In 708, the LMF 702 sends a request for the model to the discovered FL server 704 (including information about the model).

In 709, the FL server 704 determines the base model that it intends to use for training the model.

In 710, the FL server 704 discovers a base model provider 703 which can provide the determined base model by sending a request which includes information about the base model (a UE category for which it should be suitable as a starting point).

In 711, the FL server 704 requests the base model from the discovered base model provider 703 (e.g. by sending a request including an identification of the requested base model).

In 712, the base model provider 703 provides the requested base model to the FL server 704.

In 713, the FL server 704 discovers suitable FL clients using the NRF 701 by sending a corresponding request which gives information about the model (e.g. the UE category for which the model should be trained).

In 714, the FL server 704 builds the specific positioning model from the base model it has received from the base model provider 703 (e.g. by adding one or more layers). This is optional in case that the base model has already the same architecture as the model to be trained and is a pre-trained version of it. Further, the FL server 704 selects the FL clients to be used for federated learning of the model. The FL clients it selects is the set of LMFs 705 which may or may not include the LMF client 702.

The FL server 704 and the set of LMFs 705 then perform federated learning 715 to train the model. This includes a loop until a stopping criterion is fulfilled (which the FL server 704 checks), wherein each iteration includes the FL server 704 sending a model training request to the LMFs 705 including a current version of the model in 716, the LMFs 705 performing local training of the model to determined updates of the current version of the model (using it as a starting point) in 717, the LMFs 705 sending the updates to the FL server 704 in 718 and the FL server 704 updating its version of the model (also denoted as the global model) in 719.

The FL server 704 in 720 then provides the trained model to the LMF 702.

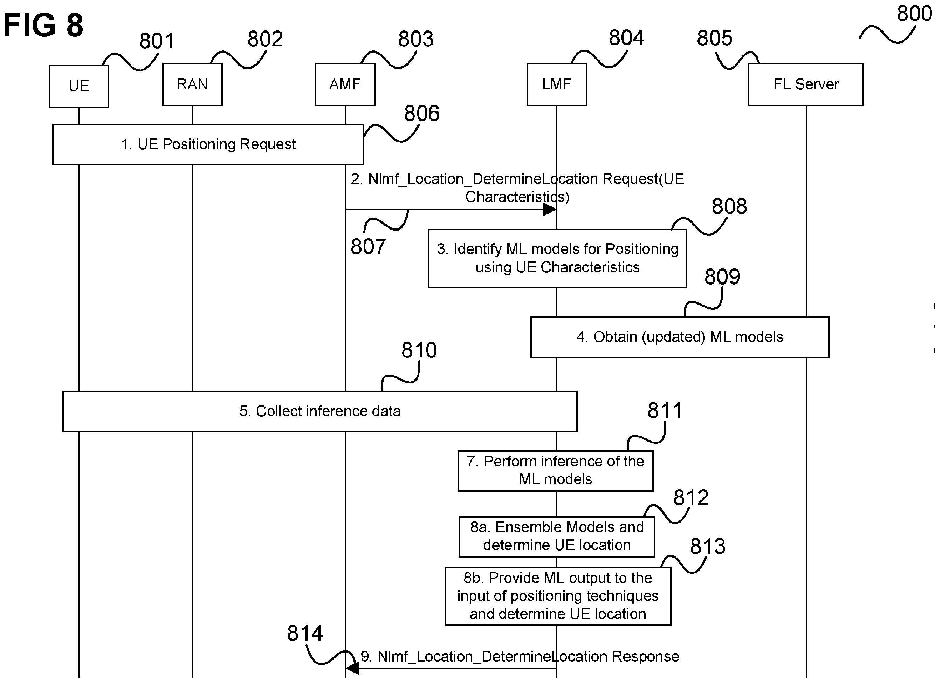

Figure 8 shows a flow diagram 800 illustrating a flow for using a positioning model for inference.

A UE 801, a RAN 802, an AMF 803, an LMF 804 and an FL server 805 are involved in the flow.

In 806, the UE 801, the RAN 802 or the AMF 803 issue a positioning request for the UE 801. In 807, the AMF sends a request to determine a position of the UE 801 to the LMF 804 which includes a specification of which mobile terminal information (in figure 8 denoted as UE characteristics) should be used as input data for the positioning. This input data for the positioning is for example a device type of the UE, mobility information about the UE (such as a speed estimate), UE signal information (e.g. PRS or SRS measurements)
In 808, the LMF 804 identifies one or more ML models that are suitable for determining positioning information of the UE 801 using the mobile terminal information.

In 809, the LMF 804 obtains the one or more identified ML models (e.g. as described with reference to figure 7).

In 810, the LMF 804 collects inference data, i.e. mobile terminal information (of the type as specified by the AMF in 806).

In 811 the LMF 804 performs inference by supplying the collected inference data to each of the obtained one or more ML models.

As mentioned above, each of the one or more ML models may directly output the UE position. To improve the accuracy, the output of multiple ML models can be combined (e.g., averaged) via ensemble methods in 812. Each ML model may also output assistant positioning information. In that case the LMF 804 supplies the assistant positioning information to another (non-ML) positioning method in 813 to determine the UE position.

In any case, the LMF 804 responds to the AMF 803 indicating the determined UE position in 814.

It should be noted that the base model provider 205 and the FL server 206 may be combined into one entity. The FL server 206 may be for example an NWDAF (possibly also including the base model provider 205). The FL server 206 may also be an LMF (possibly also including the base model provider 205).

According to one embodiment, the base model provider may build category-specific ML models; in this embodiment:
- The base model provider also indicates category-specific ML model provisioning capability and a list of supported category-specific ML models in its NRF registration.
- The FL server gets the category-specific ML models from the base model provider and trains them using federated learning.

According to one embodiment, asynchronous federated learning may be used to continuously update the ML model.

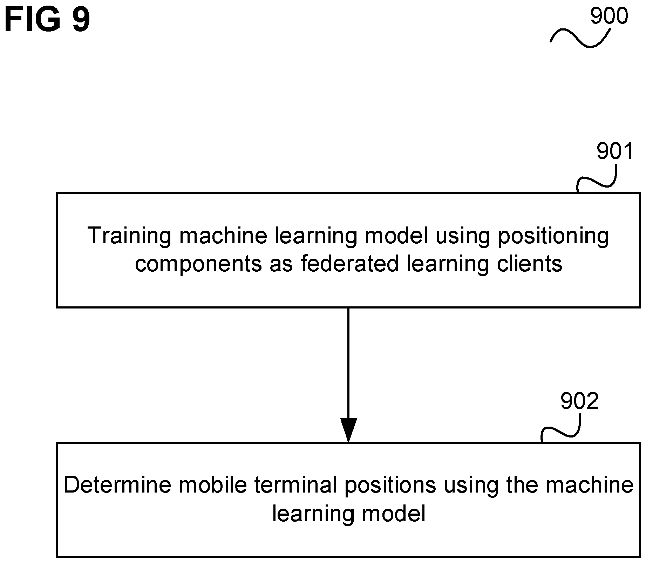

In summary, according to various embodiments, a method is provided as illustrated in figure 9.

Figure 9 shows a flow diagram 900 illustrating a method for mobile terminal positioning according to an embodiment.

In 901, a positioning machine learning model to output positioning information in response to mobile terminal status information (i.e. such that the machine learning model outputs positioning information in response to mobile terminal status information) is trained by federated learning using a plurality of positioning components (LMFs in the examples above but depending on the architecture or generation of the communication system these may also be other positioning components than LMFs (e.g. be called differently)) as federated learning clients.

In 902 a position of a plurality of mobile terminals is determined using the trained positioning machine learning model.

According to various embodiments, in other words, a positioning (ML) model is trained using positioning components (e.g. computer devices configured to perform mobile terminal positioning) as federated learning clients (i.e. to act or implement federated learning clients, e.g. run software which make them act as federated learning clients for the federated learning for training the model, which they may then implement to perform positioning). Because the positioning components are the entities which have training data (for a positioning model) at their disposal (i.e. they are the gateways for that data) because they do positioning in particular without machine learning and thus get training data (examples of mobile terminal information as input and resulting position as output) this speeds up training and reduces overhead (compared to an approach where the positioning components transfer training data to a training entity). Additionally, instead of redundant ML model training in multiple positioning components, the positioning components collaborate via federated learning to achieve better performance.

Multiple models for positioning of different categories of mobile terminals may be supported and trained (e.g. using FL using positioning components as FL clients). Instead of training (similar) models for different categories of mobile terminals, a base model may be trained to avoid redundant training and speed up model training. Commonalities of a set of categories can thus be captured in one or more base models which are trained using aggregated data and used to speed up training category-specific ML models.

The ML model (or each ML model in case that multiple ones are trained for multiple categories) may directly output a mobile terminal position or may output assistant positioning information.

The ML model is trained such that it generates positioning information of a mobile terminal from input data including information about the mobile terminal such as PRS signal measurements (of a PRS signal received by the mobile terminal), SRS signal measurements (of an SRS signal transmitted by the mobile terminal), a speed estimate of the mobile terminal, a radio cell or tracking area in which the mobile terminal is located, a UE device type etc.

As described above, the entities may be registered in repositories, e.g. an NRF which acts as repository for registering all of them, i.e. acts as positioning component repository, FL server repository and base model provider repository. The registration is done be profile indicating the respective FL/base model training capabilities, e.g. the training of which models they support (e.g. regarding the type of input and/or output).

The method may be performed and the components of a positioning system performing the method may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for mobile terminal positioning, comprising:
Training a positioning machine learning model to output positioning information in response to mobile terminal status information by federated learning using a plurality of positioning components as federated learning clients; and
Determining a position of a plurality of mobile terminals using the trained positioning machine learning model.

2. The method of claim 1, wherein the positioning components and/or one or more other positioning components determine the position of the plurality of mobile terminals using the trained positioning machine learning model.

3. The method of claim 1 or 2, comprising training, for each mobile terminal category of a plurality of mobile terminal categories, a respective positioning machine learning model to output positioning information in response to mobile terminal status information by federated learning using a respective plurality of positioning components as federated learning clients and determining a position of a plurality of mobile terminals of the category using the respective trained positioning machine learning model.

4. The method of any one of claims 1 to 3, wherein the categories differ in a mobility of the mobile terminals and/or wherein the categories differ in a location of the mobile terminals.

5. The method of any one of claims 1 to 4, comprising registering positioning components supporting federated learning in a positioning component repository using positioning component profiles indicating their federated learning capabilities and selecting the plurality of positioning components from the registered positioning components.

6. The method of any one of claims 1 to 5, comprising selecting a federated learning server supporting training of the positioning machine learning model and controlling the federated learning by the selected federated learning server.

7. The method of claim 6, comprising registering federated learning servers in a federated learning server repository using federated server profiles indicating their federated learning capabilities and selecting the federated learning server from the registered federated learning servers.

8. The method of any one of claims 1 to 7, comprising training a base model and using the trained base model for a starting point for training the positioning machine learning model.

9. The method of claim 8, comprising adding one or more neural network layers to the base layer to construct the positioning machine learning model.

10. The method of claim 8 or 9, comprising training the base model by a base model provider and acquiring the trained base model from the base model provider.

11. The method of claim 10, comprising registering base model providers in a base model provider repository using base model profiles indicating their base model training capabilities and determining the base model provider from which to acquire the trained base model from the registered base model providers.

12. The method of any one of claims 8 to 11, comprising training the base model using training data acquired from the plurality of positioning components and/or one or more further positioning components.

13. The method of any one of claims 8 to 12, comprising training the base model using training data whose amount is reduced with respect to the amount of local training data available at the plurality of positioning components and/or one or more further positioning components by sampling from, aggregating and/or filtering the local training data.

14. The method of any one of claims 8 to 13, comprising training the base model using training data whose amount is reduced with respect to the amount training data used by the federated learning clients to train the positioning machine learning model.

15. A mobile terminal positioning system configured to perform the method of any one of claims 1 to 14.

## Amended claims

### Amended claims in accordance with Rule 137(2) EPC.

1. A method (900) for mobile terminal (101, 201) positioning, comprising:
Training (901) a positioning machine learning model (108) to output positioning information in response to mobile terminal status information by federated learning using a plurality of positioning components as federated learning clients,
wherein for each mobile terminal category of a plurality of mobile terminal categories, a respective positioning machine learning model (717) is to output positioning information in response to mobile terminal status information by federated learning using a respective plurality of positioning components as federated learning clients, and to determine a position of a plurality of mobile terminals of the category using said respective trained positioning machine learning model; and
Determining (902) a position of a plurality of mobile terminals using the trained positioning machine learning model (108).

2. The method (900) of claim 1, wherein the positioning components and/or one or more other positioning components determine the position of the plurality of mobile terminals (101,201) using the trained positioning machine learning model (108).

3. The method (900) of any one of claims 1 or 2, wherein the categories differ in a mobility of the mobile terminals (101, 201) and/or wherein the categories differ in a location of the mobile terminals.

4. The method (900) of any one of claims 1 to 3, comprising registering positioning components supporting federated learning in a positioning component repository (204) using positioning component profiles indicating their federated learning capabilities and selecting the plurality of positioning components from the registered positioning components.

5. The method (900) of any one of claims 1 to 4, comprising selecting a federated learning server (401) supporting training of the positioning machine learning model (108) and controlling the federated learning by the selected federated learning server.

6. The method (900) of claim 5, comprising registering federated learning servers (401) in a federated learning server repository using federated server profiles indicating their federated learning capabilities and selecting the federated learning server from the registered federated learning servers.

7. The method (900) of any one of claims 1 to 6, comprising training a base model (605) and using the trained base model for a starting point for training the positioning machine learning model.

8. The method (900) of claim 7, comprising adding one or more neural network layers to the base layer to construct the positioning machine learning model (108).

9. The method (900) of claim 7 or 8, comprising training the base model (605) by a base model provider (703) and acquiring the trained base model from the base model provider.

10. The method (900) of claim 9, comprising registering base model providers (703) in a base model provider repository using base model profiles indicating their base model training capabilities and determining the base model provider from which to acquire the trained base model (108) from the registered base model providers.

11. The method (900) of any one of claims 7 to 10, comprising training the base model (605) using training data acquired from the plurality of positioning components and/or one or more further positioning components.

12. The method (900) of any one of claims 7 to 11, comprising training the base model (605) using training data whose amount is reduced with respect to the amount of local training data available at the plurality of positioning components and/or one or more further positioning components by sampling from, aggregating and/or filtering the local training data.

13. The method (900) of any one of claims 7 to 12, comprising training the base model (605) using training data whose amount is reduced with respect to the amount training data used by the federated learning clients to train the positioning machine learning model.

14. A mobile terminal positioning system (100) configured to perform the method (900) of any one of claims 1 to 13.
